# EUROPEAN PATENT APPLICATION

(11) **EP 4 797 236 A1**
(43) Date of publication of application: **26.08.2026**
(21) Application number: 26156245.8
(22) Date of filing: 04.02.2026
(51) Int. Cl.: G08B 25/00, G08B 25/14, G08B 17/00

(54) **CAUSE AND EFFECT PROGRAMMING MODEL FOR FIRE CONTROL PANELS**

(30) Priority: 25.02.2025 US 202519062553
(71) Applicant: Honeywell International Inc., Charlotte, NC 28202 (US)
(72) Inventor: RAJ, Nishant, Charlotte, 28202 (US); WOLF, Benjamin Henry, Charlotte, 28202 (US); SWAMINATHAN, Sriramakrishnan, Charlotte, 28202 (US)
(74) Representative: Haseltine Lake Kempner LLP

(57) **Abstract**

A cause and effect programming model for fire control panels (102) is described herein. An example fire control panel (102) includes a memory (106), and a processor (104) configured to execute instructions stored in the memory to receive information associated with a fire event occurring in a facility, detect a pattern in the received information associated with the fire event, and adjust an output of the fire control panel (102) during the fire event based on the detected pattern in the received information associated with the fire event.

## Description

### Technical Field

The present disclosure relates generally to devices, methods, and systems for a cause and effect programming model for fire control panels.

### Background

Large facilities (e.g., buildings), such as commercial facilities, office buildings, hospitals, schools, and the like, may have a fire control system that can be triggered during an emergency event (e.g., a fire) to provide guidance to occupants of the facility, such as, for instance, a warning for the occupants to evacuate. For example, a fire control system may include a fire control panel and a plurality of fire sensing devices (e.g., sounders and/or smoke detectors), located throughout the facility (e.g., on different floors and/or in different rooms of the facility) that can sense a fire occurring in the facility and provide an audio notification of the fire to the occupants of the facility via alarms. During the fire, the fire control panel may receive a signal (e.g., an alarm signal) from the fire sensing device that sensed the fire, and activate other fire sensing devices in response to receiving the signal.

### Brief Description of the Drawings

Figure 1 illustrates an example of a fire control system for a facility in accordance with an embodiment of the present disclosure.
Figure 2 illustrates a conceptual example of operation of a cause and effect programming model for fire control panels in accordance with an embodiment of the present disclosure.
Figure 3 illustrates a conceptual example of operation of a cause and effect programming model for fire control panels in accordance with an embodiment of the present disclosure.
Figure 4 illustrates a conceptual example of operation of a cause and effect programming model for fire control panels in accordance with an embodiment of the present disclosure.

### Detailed Description

A cause and effect programming model for fire control panels is described herein. An example fire control panel includes a memory, and a processor configured to execute instructions stored in the memory to receive information associated with a fire event occurring in a facility, detect a pattern in the received information associated with the fire event, and adjust an output of the fire control panel during the fire event based on the detected pattern in the received information associated with the fire event.

Upon receiving a signal (e.g., an alarm signal) from a fire sensing device that a fire has been sensed in a facility, a fire control panel may use logic, such as, for instance, cause and effect rules, to determine which other fire sensing devices of the facility need to be activated. However, previous fire control panel logic may be static logic that can not be adapted to new safety requirements or changes in the layout of the facility without significant manual reprogramming, which leads to increased maintenance time and/or cost. For example, as a facility expands and/or new zones are added, the static logic can become a bottleneck that makes it difficult to scale the fire control system efficiently and reliably without a complete system overhaul. Further, such previous static fire control panel logic can limit the ability of the fire control panel activation output (e.g., which devices are activated by the fire control panel) to account for specific facility needs, occupant behaviors, and complex and/or evolving emergency situations, which can lead to user dissatisfaction and/or suboptimal performance (e.g., less effective and/or slower responses to the fire) that can adversely affect the safety of the facility occupants.

Fire control panels of the present disclosure, however, can utilize an intelligent and dynamic cause and effect logic programming model that allows the fire control panel to take real time data and parameters, such as, for instance, temperature, wind speed, wind direction, fire spread rate, extreme rise in heat, and/or humidity, associated with a fire into account when determining which fire sensing devices of the facility need to be activated. For instance, when the fire control panel detects certain patterns of change and/or variation in the real time data and parameters, the activation output of the fire control panel can be adjusted accordingly. As an example, if a very fast rate of spread of a fire is detected in certain areas of the facility, the activation rules for the fire control panel can be different than the activation rules for a normal fire spread rate.

As such, a fire control panel cause and effect programming model in accordance with the present disclosure can account for specific facility needs, occupant behaviors, and complex and/or evolving emergency situations, which can increase user satisfaction with, and the performance of, the fire control system (e.g., by providing more effective and/or quicker responses to fires), which in turn can provide increased safety for the facility occupants, as compared with previous (e.g., static) fire control panel logic. Further, a fire control panel cause and effect programming model in accordance with the present disclosure can be adaptable to new safety requirements or changes in the layout of the facility without needing manual reprogramming, which can reduce the associated maintenance time and/or cost involved for the fire control system.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

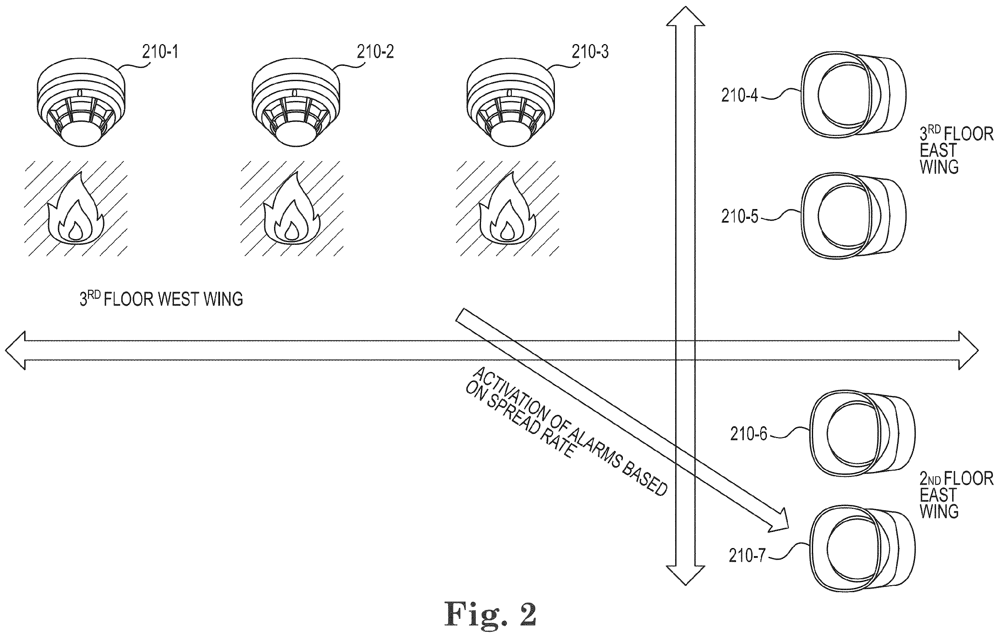

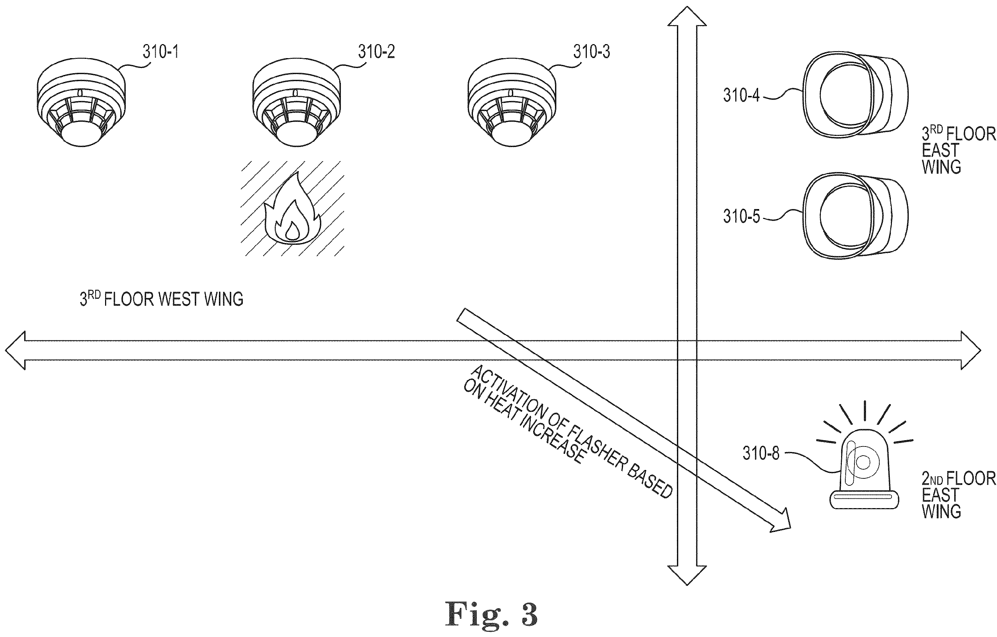

The figures herein follow a numbering convention in which the first digit or digits correspond to the drawing figure number and the remaining digits identify an element or component in the drawing. Similar elements or components between different figures may be identified by the use of similar digits. For example, 210 may reference element "10" in Figure 2, and a similar element may be referenced as 310 in Figure 3.

As used herein, "a", "an", or "a number of" something can refer to one or more such things, while "a plurality of" something can refer to more than one such things. For example, "a number of components" can refer to one or more components, while "a plurality of components" can refer to more than one component. Additionally, the designator "N", as used herein, particularly with respect to reference numerals in the drawings, indicates that a number of the particular feature so designated can be included with embodiments of the present disclosure.

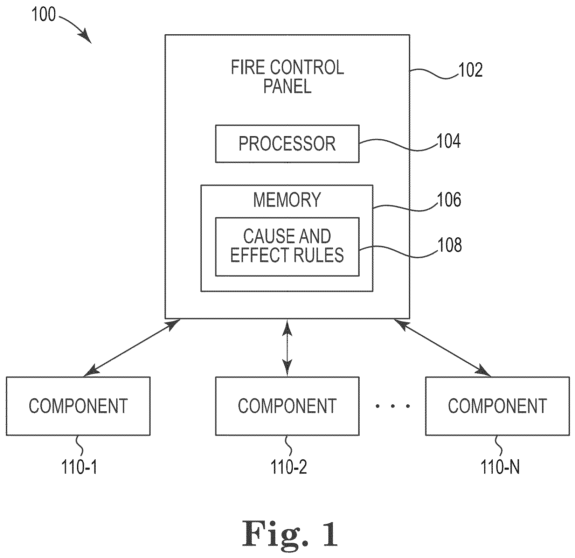

Figure 1 illustrates an example of a fire control system 100 for a facility in accordance with an embodiment of the present disclosure. The facility can be, for instance, a large facility having a large number of floors, such as a commercial facility, office building, hospital, school, and the like. However, embodiments of the present disclosure are not limited to a particular type of facility.

As shown in Figure 1, fire control system 100 can include a fire control panel 102. Fire control panel 102 can be, for instance, a physical control panel, such as a control box, installed in the facility.

As shown in Figure 1, fire control panel 102 can include a processor 104 and a memory 106. Memory 106 can be any type of storage medium that can be accessed by processor 104 to perform various examples of the present disclosure. For example, memory 106 can be a non-transitory computer readable medium having computer readable instructions (e.g., computer program instructions), including cause and effect rules 108, stored thereon that are executable by processor 104 for operating fire control panel 102 in accordance with the present disclosure, as will be further described herein. Cause and effect rules 108 can be, for instance, editable cause and effect rules.

Memory 106 can be volatile or nonvolatile memory. Memory 106 can also be removable (e.g., portable) memory, or non-removable (e.g., internal) memory. For example, memory 106 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 106 is illustrated as being located within fire control panel 102, embodiments of the present disclosure are not so limited. For example, memory 106 can also be located internal to another computing resource (e.g., enabling computer readable instructions to be downloaded over the Internet or another wired or wireless connection).

As shown in Figure 1, fire control system 100 can include a number of components 110-1, 110-2, . . ., 110-1 (which may be collectively referred to herein as components 110). Components 110 can located throughout the facility (e.g., on different floors and/or in different rooms, zones, areas, wings, etc., of the facility).

Components 110 can include devices that can detect a fire or other emergency occurring in the facility and/or provide a notification, such as an audio or visual alarm, of a fire or other emergency occurring in the facility to occupants of the facility. For example, components 110 can include smoke detectors, heat sensors, multi gas sensors including carbon monoxide sensors, sounders, strobe lights, and/or output relays. Additionally, components 110 can include devices that can control a fire (e.g., the spread of the fire) or other emergency occurring in the facility. For example, components 110 can include fans and/or dampers that can perform smoke control operations (e.g., pressurizing, purging, exhausting, etc.) during a fire, and/or sprinklers that can provide water to extinguish a fire. Additionally, components 110 can include devices that may be part of a building management system (BMS) of the facility. For example, components 110 can include humidity sensors.

Fire control panel 102 can be used to monitor and/or control components 110. For instance, a user can use fire control panel 102 to directly control the operation of (e.g., actions performed by) components 110. Further, fire control panel 102 can receive (e.g., collect) data, such as, for instance, real-time operational data, from the components. For instance, fire control panel 102 can receive the data directly from components 110. Such data can include, for instance, current operational statuses, operational states, and/or properties of the components. As an additional example, fire control panel 102 can receive signals (e.g., alarm signals) from the components indicating that an emergency event (e.g., a fire) is occurring in the facility. As an additional example, fire control panel 102 can send signals (e.g., commands) to components 102 to activate during an emergency event (e.g., a fire) occurring in the facility.

For example, fire control panel 102 can receive information associated with a fire or other emergency event occurring in the facility from components 110. This information can be real-time data and/or parameters sensed (e.g., measured) during the event (e.g., the fire event) by components 110. As an example, the information can include the wind speed and/or wind direction at the facility during the fire event. As an additional example, the information can include the temperature, smoke level and/or humidity level in the facility during the fire event. As an additional example, the information can include the mixture and/or quantity of gases, such as, for instance, carbon monoxide, in the facility during the fire event. As an additional example, the information can include the rate at which components 110 are detecting the fire event, and/or the quantity (e.g., volume) of components detecting the fire event.

For instance, if a component 110 is a heat sensor, the component can sense the temperature in the portion of the facility (e.g., floor room, zone, area, wing, etc.) in which the component is located during the fire event, and send (e.g., transmit) the sensed temperature to fire control panel 102. As an additional example, if a component 110 is a smoke detector, the component can sense the smoke level in the portion of the facility in which the component is located during the fire event, and send the sensed smoke level to fire control panel 102. As an additional example, if a component 110 is a carbon monoxide sensor, the component can sense the carbon monoxide level in the portion of the facility in which the component is located during the fire event, and send the sensed carbon monoxide level to fire control panel 102. As an additional example, if a component 110 is a humidity sensor, the component can sense the humidity level in the portion of the facility in which the component is located during the fire event, and send the sensed humidity level to fire control panel 102.

Fire control panel 102 (e.g., cause and effect rules 108) can detect a pattern, such as, for instance, a change and/or variation, in the information associated with the fire event received from components 110, and adjust the output of the fire control panel 102 during the fire event based on the detected pattern. Adjusting the output of the fire control panel 102 can include determining and/or adjusting which components 110 of the fire control system 100 are to be activated by fire control panel 102 during the fire event. For instance, fire control panel 102 (e.g., cause and effect rules 108) can determine to activate components 110 of fire control system 100 that are located in a different portion(s) of the facility (e.g., in a different floor, room, zone, area, wing, etc.) than the portion(s) of the component(s) 110 from which the information associated with the fire event was received (e.g., portions of the facility where the fire event may not yet be occurring) based on the detected pattern in the information. As such, the output (e.g., effect) of cause and effect rules 108 can be varied and/or changed based on the real-time data and/or parameters being received from components 110 during the fire event based on the rule definitions of cause and effect rules 108. Examples of such rules that can be created and utilized in real-time will be further described herein.

Fire control panel 102 can activate the components 110 by, for example, sending an activation command to the components 110 that are to be activated. The components 110 that are to be activated can include sounders, strobe lights, and/or sprinklers, for example. Activating the components 110 can include, for example, activating (e.g., triggering) an alarm (e.g., an alarm signal) in the components, and/or activating a pre-alarm (e.g., a pre-alarm) signal in the components, as will be further described herein.

As an example, the pattern detected by fire control panel 102 can be the rate of spread of the fire event occurring in the facility. In such an example, the components that are activated by fire control panel 102 (e.g., the output of cause and effect rules 108) can be different depending on the detected rate of spread (e.g., depending on whether detected rate of spread is normal or fast). For instance, if the rate of spread of the fire event is below a particular spread rate (e.g., if the spread rate is normal), fire control panel 102 can activate a first group of components 110 of fire control system 100, such as, for instance, the components 110 that are located in the same portion(s) of the facility as the component(s) 110 from which the information associated with the fire event was received. However, if the rate of spread of the fire event is above the particular spread rate (e.g., if the spread rate is fast), fire control panel 102 can activate a second group of (e.g., additional) components 110 of fire control system 100 (e.g., components that would not be activated if the spread rate were normal), such as, for instance, components 110 located in a different portion(s) of the facility than the portion(s) of the component(s) 110 from which the information associated with the fire event was received. Such an example will be further described herein (e.g., in connection with Figure 2).

The rate of spread of the fire event can be detected, for example, based on the rate at which components 110 are detecting the fire event and/or the quantity of components 110 that have detected the fire event. For instance, the rate of spread, and therefore the components activated by fire control panel 102, would be different if the fire event is being detected by a different (e.g. new) component once every five seconds (e.g., a fast spread rate) as opposed to once every sixty seconds.

As an additional example, the manner in which the components 110 are activated can be different depending on the detected rate of spread (e.g., depending on whether the detected rate of spread is fast or very fast). For instance, if the rate of spread of the fire event is below a particular spread rate (e.g., if the spread rate is fast), fire control panel 102 can activate (e.g., trigger) a pre-alarm (e.g., a pre-alarm signal) in a group of components 110 of fire control system 100, such as, for instance, components 110 located in a different portion(s) of the facility than the portion(s) of the component(s) 110 from which the information associated with the fire event was received. However, if the rate of spread of the fire event is above the particular spread rate (e.g., if the spread rate is very fast), fire control panel 102 can activate (e.g., trigger) an alarm (e.g., an alarm signal) in the group of components 110. Such an example will be further described herein (e.g., in connection with Figure 2).

As an additional example, the pattern detected by fire control panel 102 can be an increase of heat in a portion of the facility during the fire event. In such an example, the components that are activated by fire control panel 102 (e.g., the output of cause and effect rules 108) can be different depending on the detected heat increase (e.g., depending on whether the heat has increased by a particular amount within a particular time). For instance, if the heat in in the portion of the facility has increased by more than the particular amount within the particular time (e.g., if the detected pattern is a sudden, strong heat increase), fire control panel 102 can activate a group of components 110 of fire control system that would not otherwise be activated in the absence of such a sudden, strong heat increase, such as, for instance, components 110 located in a different portion(s) of the facility than the portion in which the heat increase has been detected. Such an example will be further described herein (e.g., in connection with Figure 3).

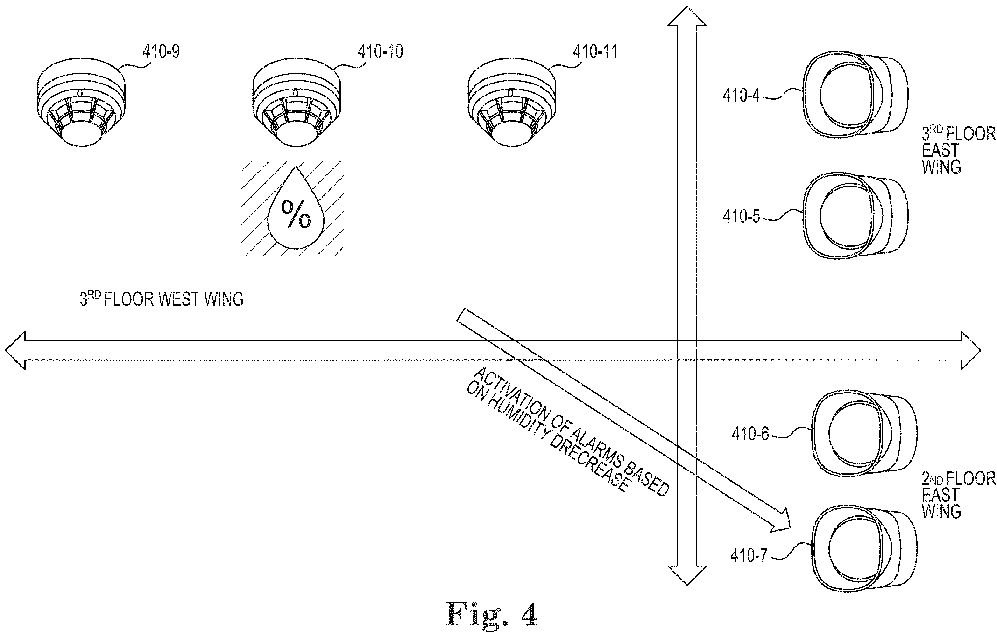

As an additional example, the pattern detected by fire control panel 102 can be a decrease in humidity in a portion of the facility during the fire event. In such an example, the components that are activated by fire control panel 102 (e.g., the output of cause and effect rules 108) can be different depending on the detected humidity decrease (e.g., depending on whether the humidity has decreased by a particular amount within a particular time). For instance, if the humidity in in the portion of the facility has decreased by more than the particular amount within the particular time (e.g., if the detected pattern is a sudden, strong drop in humidity), fire control panel 102 can activate a group of components 110 of fire control system that would not otherwise be activated in the absence of such a sudden, strong humidity drop, such as, for instance, components 110 located in a different portion(s) of the facility than the portion in which the humidity decrease has been detected. Such an example will be further described herein (e.g., in connection with Figure 4).

As an additional example, the pattern detected by fire control panel 102 can be an increase in smoke in a portion of the facility during the fire event. In such an example, the components that are activated by fire control panel 102 (e.g., the output of cause and effect rules 108) can be different depending on the detected smoke increase (e.g., depending on whether the smoke level has increased by a particular amount within a particular time).

As an additional example, the pattern detected by fire control panel 102 can be the mixture of gases in a portion of the facility during the fire event, such as, for instance, the smoke level in the portion of the facility in combination with an increase in a carbon monoxide level in the portion of the facility. For instance, cause and effect rules 108 can include a rule that if a smoke level sensed by a smoke detector in a portion of the facility exceeds a particular percentage (e.g., 50%) and a carbon monoxide level sensed by a carbon monoxide sensor in the portion of the facility has increased by a particular percentage within a particular time (e.g., by at least 15% within two minutes), fire control panel 102 can activate (e.g., trigger) an alarm (e.g., an alarm signal) in the components 110 located in the portion of the facility and/or other portions of the facility.

As an additional example, the pattern detected by fire control panel 102 can be the rate at which components 110 located in a portion of the facility are detecting the fire event, and/or the quantity (e.g., volume) of components 110 located in the portion of the facility that detect the fire event.

As an additional example, the pattern detected by fire control panel 102 can be a smoke level in a portion of the facility in combination with an increase in temperature in the portion of the facility. For instance, cause and effect rules 108 can include a rule that if a smoke level sensed by a smoke detector in a portion of the facility exceeds a particular percentage (e.g., 60%) and a temperature sensed by a heat sensor in the portion of the facility has increased by a particular amount within a particular time (e.g., by at least eight degrees within five minutes), fire control panel 102 can activate (e.g., trigger) sprinklers in the components 110 located in the portion of the facility and/or other portions of the facility.

As an additional example, the pattern detected by fire control panel 102 can be a wind speed and wind direction at the facility in combination with the detection of a flame at the facility. For instance, cause and effect rules 108 can include a rule that if the wind speed at the facility exceeds a particular speed (e.g., 15 kilometers per hour) and a flame detection is positive, fire control panel 102 can activate sprinklers in the components 110 located in the direction of the wind (e.g., to create a water barrier for the fire event).

As an additional example, the pattern detected by fire control panel 102 can be a temperature in a portion of the facility in combination with an increase in a carbon monoxide level in the portion of the facility. For instance, cause and effect rules 108 can include a rule that if a temperature sensed by a heat sensor in a portion of the facility is stable and a carbon monoxide level sensed by a carbon monoxide sensor in the portion of the facility has increased over a particular time (e.g., a gradual increase over 15 minutes), fire control panel 102 can generate a maintenance alert for a possible equipment malfunction.

As an additional example, the pattern detected by fire control panel can be a smoke level in a portion of the facility in combination with an increase in temperature in the portion of the facility and the time of day. For instance, cause and effect rules 108 can include a rule that if a smoke level sensed by a smoke detector in a portion of the facility exceeds a particular percentage (e.g., 30%) and a temperature sensed by a heat sensor in the portion of the facility increases by any amount at a particular time of day (e.g., between 10:00 PM and 6:00 AM), fire control panel 102 can activate (e.g., trigger) alarms in the components 110 located in the portion of the facility and/or other portions of the facility.

As an additional example, the pattern detected by fire control panel 102 can be a smoke level in a particular (e.g., specific) portion of the facility in combination with an increase in temperature in that particular portion of the facility. For instance, cause and effect rules 108 can include a rule that if a smoke level sensed by a smoke detector in a particular portion of the facility (e.g., the kitchen) exceeds a particular percentage (e.g., 40%) and a temperature sensed by a heat sensor in that particular portion of the facility has increased by a particular amount within a particular time (e.g., by at least five degrees within one minute), fire control panel 102 can activate (e.g., trigger) alarms in the components 110 located in that particular portion of the facility and/or other portions of the facility.

Figure 2 illustrates a conceptual example of operation of a cause and effect programming model for fire control panels, such as, for instance, fire control panel 102 having cause and effect rules 108 previously described in connection with Figure 1, in accordance with an embodiment of the present disclosure.

In the example illustrated in Figure 2, a fire event is occurring in the third floor west wing of a facility (e.g., a facility whose fire control system includes fire control panel 102). Heat sensors 210-1, 210-2, and 210-3 located in the third floor west wing of the facility can sense the temperature in the third floor west wing of the facility during the fire event, and send (e.g., transmit) the sensed temperatures to the fire control panel, as previously described herein.

The fire control panel (e.g., the cause and effect rules of the fire control panel) can detect the rate of spread of the fire event occurring in the third floor west wing of facility based on the sensed temperatures received from heat sensors 210-1, 210-2, and 210-3, and determine which other components (e.g., sounders 210-4, 210-5, 210-6, and/or 210-7) of the fire control system of the facility are to be activated by the fire control panel based on the detected rate of spread. For instance, in the example illustrated in Figure 2, the fire control panel has determined to activate sounders 210-6 and 210-7 located in the second floor east wing of the facility (e.g. in addition to activating sounders 210-4 and 210-5 located in the third floor east wing of the facility) based on the detected rate of spread of the fire event in the third floor west wing of the facility being above a particular (e.g., a fast) spread rate.

Further, the manner in which sounders 210-6 and 210-7 are activated can depend on the detected rate of spread. For instance, if the detected rate of spread is a fast spread rate, the fire control panel can activate (e.g., trigger) a pre-alarm (e.g., a pre-alarm signal) in sounders 210-6 and 210-7 to provide advance information about the fire event and ensure that effective rescue plans can be implemented if needed. As an additional example, if the detected rate of spread is a very fast (e.g. dangerous) spread rate, the fire control panel can activate (e.g., trigger) an alarm (e.g., an alarm signal) in sounders 210-6 and 210-7 to alert the occupants of the second floor east wing of the facility that they need to evacuate.

Figure 3 illustrates a conceptual example of operation of a cause and effect programming model for fire control panels, such as, for instance, fire control panel 102 having cause and effect rules 108 previously described in connection with Figure 1, in accordance with an embodiment of the present disclosure.

In the example illustrated in Figure 3, a fire event is occurring in the third floor west wing of a facility (e.g., a facility whose fire control system includes fire control panel 102). Heat sensors 310-1, 310-2, and 310-3 located in the third floor west wing of the facility can sense the temperature in the third floor west wing of the facility during the fire event, and send (e.g., transmit) the sensed temperatures to the fire control panel, as previously described herein.

The fire control panel (e.g., the cause and effect rules of the fire control panel) can detect an increase of heat in the third floor west wing during the fire event based on the sensed temperatures received from heat sensors 310-1, 310-2, and 310-3, and determine which other components (e.g., sounders 310-4, 310-5 and/or strobe lights 310-8) of the fire control system of the facility are to be activated by the fire control panel based on the detected heat increase. For instance, in the example illustrated in Figure 3, the fire control panel has determined to activate strobe light 310-8 located in the second floor east wing of the facility (e.g. in addition to activating sounders 310-4 and 310-5 located in the third floor east wing of the facility) based on a sudden, strong heat increase detected in the third floor west wing based on the sensed temperature received from heat sensor 310-2. The activation of strobe light 310-8 can ensure a pre-evacuation of the second floor east wing occurs in response to the sudden, strong heat increase detected in the third floor west wing.

Figure 4 illustrates a conceptual example of operation of a cause and effect programming model for fire control panels, such as, for instance, fire control panel 102 having cause and effect rules 108 previously described in connection with Figure 1, in accordance with an embodiment of the present disclosure.

In the example illustrated in Figure 4, a fire event is occurring in the third floor west wing of a facility (e.g., a facility whose fire control system includes fire control panel 102). Humidity sensors 410-9, 410-10, and 410-11 located in the third floor west wing of the facility can sense humidity levels in the third floor west wing of the facility during the fire event, and send (e.g., transmit) the sensed humidity levels to the fire control panel, as previously described herein.

The fire control panel (e.g., the cause and effect rules of the fire control panel) can detect an decrease in humidity in the third floor west wing during the fire event based on the sensed humidity levels received from humidity sensors 410-9, 410-10, and 410-11, and determine which other components (e.g., sounders 410-4, 410-5, 410-6, and/or 410-7) of the fire control system of the facility are to be activated by the fire control panel based on the detected humidity decrease. For instance, in the example illustrated in Figure 3, the fire control panel has determined to activate sounders 410-6 and 410-7 located in the second floor east wing of the facility (e.g. in addition to activating sounders 410-4 and 410-5 located in the third floor east wing of the facility) based on a sudden, strong drop in humidity detected in the third floor west wing based on the sensed humidity levels received from humidity sensors 410-9, 410-10, and 410-11. For instance, the fire control panel can activate (e.g., trigger) a pre-alarm (e.g., a pre-alarm signal) in sounders 410-6 and 410-7.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A fire control panel (102), comprising:
a memory (106); and
a processor (104) configured to execute instructions stored in the memory (106) to:
receive information associated with a fire event occurring in a facility;
detect a pattern in the received information associated with the fire event; and
adjust an output of the fire control panel (102) during the fire event based on the detected pattern in the received information associated with the fire event.

2. The fire control panel of claim 1, wherein adjusting the output of the fire control panel comprises adjusting which components (110, 210, 310, 410) of a fire control system (100) of the facility are activated by the fire control panel.

3. The fire control panel of claim 1, wherein the detected pattern comprises a rate of spread of the fire event occurring in the facility.

4. The fire control panel of claim 3, wherein adjusting the output of the fire control panel based on the detected pattern comprises:
activating, by the fire control panel, a first group of components (110, 210, 310, 410) of a fire control system (100) of the facility if the rate of spread of the fire event is below a particular rate; and
activating, by the fire control panel, a second group of components (110, 210, 310, 410) of the fire control system (100) of the facility if the rate of spread of the fire event is above the particular rate.

5. The fire control panel of claim 3, wherein adjusting the output of the fire control panel based on the detected pattern comprises:
activating, by the fire control panel, a pre-alarm in a group of components (110, 210, 310, 410) of a fire control system (100) of the facility if the rate of spread of the fire event is below a particular rate; and
activating, by the fire control panel, an alarm in the group of components (110, 210, 310, 410) of the fire control system (100) of the facility if the rate of spread of the fire event is above the particular rate.

6. The fire control panel of any one of claims 1-5, wherein the detected pattern comprises at least one of:
an increase of heat in a portion of the facility during the fire event;
an increase of smoke in a portion of the facility during the fire event;
a mixture of gases in a portion of the facility during the fire event;
a rate at which components in a portion of the facility are detecting the fire event; and
a quantity of components in a portion of the facility that are detecting the fire event.

7. The fire control panel of any one of claims 1-5, wherein the detected pattern comprises a decrease of humidity in a portion of the facility during the fire event.

8. The fire control panel of any one of claims 1-5, wherein the received information associated with the fire event includes:
a wind speed at the facility during the fire event; and
a wind direction at the facility during the fire event.

9. The fire control panel of any one of claims 1-5, wherein the received information associated with the fire event includes at least one of:
a temperature in a portion of the facility during the fire event;
a smoke level in a portion of the facility during the fire event;
a mixture and quantity of gases in a portion of the facility during the fire event;
a humidity level in a portion of the facility during the fire event;
a rate at which components in a portion of the facility are detecting the fire event; and
a quantity of components in a portion of the facility that are detecting the fire event.

10. A method for operating a fire control panel (102), comprising:
receiving, by a fire control panel (102) of a facility, information associated with a fire event occurring in the facility;
detecting, by the fire control panel (102), a pattern in the received information associated with the fire event occurring in the facility;
determining, by the fire control panel (102), which components (110, 210, 310, 410) of a fire control system (100) of the facility to activate during the fire event based on the detected pattern in the received information associated with the fire event; and
activating, by the fire control panel (102), the determined components (110, 210, 310, 410) of the fire control system (100) of the facility during the fire event.

11. The method of claim 10, wherein the method includes receiving the information associated with the fire event occurring in the facility from components (110, 210, 310, 410) of the fire control system of the facility.

12. The method of claim 10, wherein the method includes receiving the information associated with the fire event occurring in the facility from components of a building management system of the facility.

13. The method of claim 10, wherein the method includes activating the determined components of the fire control system of the facility by sending an activation command to the determined components.

14. The method of any one of claims 10-13, wherein activating the determined components of the fire control system includes activating an alarm in the determined components.

15. The method of any one of claims 10-13, wherein activating the determined components of the fire control system includes activating a pre-alarm in the determined components.
